# EUROPÄISCHE PATENTANMELDUNG

(11) **EP 4 495 854 A1**
(43) Veröffentlichungstag der Anmeldung: **22.01.2025**
(21) Anmeldenummer: 24181577.8
(22) Anmeldetag: 12.06.2024
(51) Int. Cl.: G06Q 10/0631, G06Q 50/10, G06Q 50/26, G05D 1/00, B64D 1/16

(54) **VERFAHREN ZUM BETREIBEN EINER VIELZAHL VON GEOGRAPHISCH VERTEILTEN DROHNEN**

(30) Priorität: 20.07.2023 DE 102023206904
(71) Anmelder: Robert Bosch GmbH, 70442 Stuttgart (DE)
(72) Erfinder: Vieregge, Christoph, 33729 Bielefeld (DE); Bratz, Kurt, 85748 Garching (DE); Wiesenhuetter, Marc, 21279 Hollenstedt (DE); Geiger, Michael, 68549 Ilvesheim (DE); Moldenhauer, Thomas, 84323 Massing (DE); Klose, Anett, 04838 Eilenburg Ot Pressen (DE)

(57) **Zusammenfassung**

Die Erfindung betrifft ein Verfahren zum Betreiben einer Vielzahl von geographisch verteilten Drohnen (2), die geographisch an Drohnenstandorten (4) verteilt sind und wobei jede Drohne einer von mehreren Steuereinheiten (6) zugeordnet ist, wobei durch eine computerimplementierte Einsatzplattform (12) eine Einsatzinformation, die einen Einsatzort (8) umfasst, erfasst wird (110), wobei durch die Einsatzplattform (12) unter Berücksichtigung der Einsatzinformation eine Auswahl einer Drohne aus der Vielzahl von Drohnen (2) als ausgewählte Drohne (22) bestimmt wird (150), wobei der Einsatzort (8) und die Drohnenstandorte (4) berücksichtigt werden, und wobei von der Einsatzplattform (12) eine Startanforderung zum Einsatzort (8) zu fliegen an die Steuereinheit (6), welcher die ausgewählte Drohne (22) zugeordnet ist, übermittelt wird (160).

## Beschreibung

Die vorliegende Erfindung betrifft ein Verfahren zum Betreiben einer Vielzahl von geographisch verteilten Drohnen sowie eine Recheneinheit und ein Computerprogramm zu dessen Durchführung.

### Hintergrund der Erfindung

Drohnen werden zunehmend für verschiedenste Zwecke eingesetzt. Beispiele sind das Erfassen von Luftaufnahmen mittels Kameras, das Erfassen von Temperatur oder Gaskonzentration mittels geeigneter Sensoren, der Transport von Gegenständen oder die Überwachung von Objekten, Feldern oder Waldgebieten. Aus der DE 10 2016 202 033 A1 ist beispielsweise ein Verfahren zum Überwachen eines Parkplatzes mittels einer fliegenden Drohne bekannt. Entsprechend kann sich in einem geographischen Gebiet, etwa einem städtischen oder ländlichen Gebiet, eine Vielzahl von Drohnen an verschiedenen Drohnenstandorten, die über das Gebiet verteilt sind, befinden. Die Drohnen können etwa mit verschiedenen Komponenten ausgestattet sein und verschiedenen Betreibern zugeordnet sein.

### Offenbarung der Erfindung

Erfindungsgemäß werden ein Verfahren zum Betreiben einer Vielzahl von geographisch verteilten Drohnen sowie eine Recheneinheit und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Das Verfahren gemäß der Erfindung betrifft eine Vielzahl von Drohnen, wobei die Drohnen geographisch an Drohnenstandorten verteilt sind und wobei jede Drohne einer von mehreren Steuereinheiten zugeordnet ist. Als Drohnenstandort wird hier ein Ort verstanden, an dem die Drohne stationiert ist, mit anderen Worten eine Heimatbasis. Der Drohnenstandort stellt den Ort dar, an dem sich die Drohne außerhalb von Einsätzen üblicherweise befindet. Durch eine computerimplementierte Einsatzplattform wird eine Einsatzinformation erfasst und unter Berücksichtigung der Einsatzinformation eine Drohne aus der Vielzahl von Drohnen als ausgewählte Drohne bestimmt, wobei ein in der Einsatzinformation umfasster Einsatzort und die Drohnenstandorte berücksichtigt werden. Die Einsatzplattform übermittelt eine Startanforderung, zum Einsatzort zu fliegen, an diejenige Steuereinheit, welcher die ausgewählte Drohne zugeordnet ist.

Das vorgeschlagene Verfahren ermöglicht die Nutzung von an verschiedenen Drohnenstandorten in einem geographischen Gebiet ohnehin stationierten Drohnen, so dass an beliebigen Einsatzorten innerhalb des Gebiets der Einsatz einer geeigneten Drohne der Vielzahl von Drohnen in kurzer Zeit bzw. an zu bestimmenden beliebigen Zeitpunkten erfolgen kann. Insbesondere wenn es sich bei der Einsatzanfragestelle um eine Behörde oder Organisation mit Sicherheitsaufgaben (BOS) handelt, können durch die Nutzung von verfügbaren Drohnen viele Kosten (Wartungs- und Instandsetzung, sowie für die Rund-um-die-Uhr-Verfügbarkeit von Drohnenpiloten) gespart. Die Behörde nutzt (fragt Nutzung an) die Drohnen nur, wenn der wirkliche Bedarf existiert (Einsatzfall). Insbesondere können Behörden selbst oder auch Privatpersonen oder Unternehmen deren Drohnen zur Verfügung stellen.

Es wird davon ausgegangen, dass die Drohnenstandorte (insbesondere deren geographische Position) und die dortigen Drohnen sowie deren Eigenschaften bzw. deren Ausstattung, d.h., welche Komponenten sie aufweisen, an der Einsatzplattform bekannt sind bzw. dort gespeichert sind. Es kann z.B. vorgesehen sein, dass Betreiber bzw. Eigentümer der Drohnen, die ihre Drohne für das vorgeschlagene Verfahren (im Rahmen z.B. von §21k LuftVO) zur Verfügung stellen, entsprechende Daten an die Einsatzplattform bei einer Anmeldung bzw.

Registrierung übermitteln und diese Daten von der Einsatzplattform erfasst und gespeichert werden.

Komponenten, mit denen die Drohnen unabhängig voneinander ausgestattet sein können, sind beispielsweise Kameras, z.B. optische Kameras oder Infrarot-Kameras, Sensoren, z.B. Gas-Sensoren oder Temperatur-Sensoren, oder Behälter oder Greifer, um Objekte zu transportieren.

Gemäß einer Ausgestaltung umfassen die Einsatzinformationen Komponenteninformationen, die für den Einsatz notwendige bzw. benötigte Komponenten spezifizieren, wobei bei der Auswahl der ausgewählten Drohne berücksichtigt wird, ob die ausgewählte Drohne die in den Komponenteninformationen spezifizierten Komponenten aufweist. Ebenso können die Einsatzinformationen einen Einsatzzweck umfassen, wobei bei der Auswahl der ausgewählten Drohne berücksichtigt wird, ob die ausgewählte Drohne für den Einsatzzweck geeignet ist. Entsprechend diesen Ausgestaltungen kann sichergestellt werden, dass die ausgewählte Drohne am Einsatzort benötigte Komponenten aufweist bzw. dass diese für den Einsatzzweck geeignet ist.

Gemäß einer weiteren Ausgestaltung umfassen die Einsatzinformationen einen Verfügbarkeitszeitraum, wobei bei der Auswahl der ausgewählten Drohne berücksichtigt wird, ob die ausgewählte Drohne im Verfügbarkeitszeitraum einsatzbereit bzw. verfügbar ist. Insbesondere kann die Startanforderung von der Einsatzplattform an die Steuereinheit, welcher die ausgewählte Drohne zugeordnet ist, in Reaktion auf ein Startsignal von der Einsatzanfragestelle, das innerhalb des Verfügbarkeitszeitraums erfolgt, übermittelt werden. Durch diese Ausgestaltung kann beispielsweise ein Einsatz, der innerhalb eines bestimmten zukünftigen Zeitraums bzw. Verfügbarkeitszeitraums liegen soll, für den aber der genaue Einsatzzeitpunkt noch nicht bekannt ist, geplant werden.

Gemäß einer Ausgestaltung wird bei der Auswahl der ausgewählten Drohne wenigstens eine unter Berücksichtigung der Einsatzinformationen potentiell zu verwendende (bzw. auswählbare) Drohne aus der Vielzahl von Drohnen bestimmt. Weiterhin wird für die wenigstens eine potentiell zu verwendende Drohne bestimmt, ob diese einsatzbereit ist, und es wird eine einsatzbereite Drohne als die ausgewählte Drohne bestimmt. Dadurch kann sichergestellt werden, dass eine Drohne ausgewählt wird, die zum gewünschten Zeitpunkt, insbesondere zum (aktuellen) Zeitpunkt, an dem die Auswahl erfolgt, oder innerhalb des Verfügbarkeitszeitraums, auch tatsächlich einsetzbar bzw. flugbreit ist. Entsprechende Daten können etwa an der Einsatzplattform vorliegen, z.B. von den Steuereinheiten der Drohnen in Zeitabständen oder zu bestimmten Zeitpunkten an die Einsatzplattform übermittelt werden.

Gemäß einer weitergehenden Ausgestaltung erfolgt die Bestimmung, ob die wenigstens eine potentiell zu verwendende Drohne einsatzbereit ist, mittels Datenkommunikation mit der Steuereinheit, der die jeweilige potentiell zu verwendende Drohne zugeordnet ist, wobei insbesondere jede Steuereinheit dazu konfiguriert ist, Bereitschafts-Informationen, die die Einsatzbereitschaft der ihr zugeordneten Drohne bzw. Drohnen anzeigen, in Reaktion auf eine Bereitschafts-Anfrage von der Einsatzplattform und/oder automatisch an die Einsatzplattform zu übermitteln. Vorzugsweise speichert die Einsatzplattform die übermittelte Einsatzbereitschaft. Die Einsatzbereitschaft kann entsprechend für den gewünschten Einsatzzeitpunkt mittels der Bereitschafts-Anfrage abgefragt werden.

Gemäß einer Ausgestaltung werden bei der Auswahl der ausgewählten Drohne der Einsatzort und die Drohnenstandorte berücksichtigt, indem die eine oder die mehreren Drohnen berücksichtigt werden, die Drohnenstandorte aufweisen, die die kleinsten geographischen Abstände und/oder Drohnen-Flugzeiten zum Einsatzort aufweisen und/oder deren geographische Abstände und/oder Drohnen-Flugzeiten zum Einsatzort kleiner als ein vorbestimmter geographischer Maximalabstand bzw. eine vorbestimmte Maximal-Drohnen-Flugzeit sind. Somit kann sichergestellt werden, dass eine Drohne ausgewählt wird, die den Einsatzort schnellstmöglich erreicht.

Gemäß einer Ausgestaltung schließt die Auswahl der ausgewählten Drohne eine Vorauswahl mehrerer vorausgewählter Drohnen ein, wobei die Vorauswahl so erfolgt, dass die Einsatzinformationen berücksichtigt werden. Aus den mehreren vorausgewählten Drohnen wird eine Drohne durch die Einsatzplattform automatisch als die ausgewählte Drohne bestimmt und/oder es wird unter Verwendung von Datenkommunikation zwischen der Einsatzplattform und der Einsatzanfragestelle eine Drohne aus den mehreren vorausgewählten Drohnen als die ausgewählte Drohne bestimmt. Dadurch wird eine interaktive Auswahl ermöglicht, insbesondere wird ermöglicht, dass ein Bediener an der Einsatzanfragestelle, die Auswahl beeinflusst.

Gemäß einer Ausgestaltung werden durch die ausgewählte Drohne vom Einsatzort und/oder während des Fluges zum Einsatzort erfasste Daten, insbesondere Videodaten und/oder Audiodaten und/oder Sensordaten, an die Einsatzplattform übermittelt und/oder es werden durch die ausgewählte Drohne vom Einsatzort und/oder während des Fluges zum Einsatzort erfasste Daten, insbesondere Videodaten und/oder Audiodaten und/oder Sensordaten, an die Steuereinheit, welcher die ausgewählte Drohne zugeordnet ist, übermittelt. Dabei werden die Daten von der Steuereinheit, welcher die ausgewählte Drohne zugeordnet ist, an die Einsatzplattform weitergeleitet. Die erfassten Daten werden insbesondere durch die Einsatzplattform an die Einsatzanfragestelle weitergeleitet.

Gemäß einer Ausgestaltung werden durch die Einsatzplattform Steuerbefehle für die ausgewählte Drohne und/oder für Komponenten der ausgewählten Drohne von der Einsatzanfragestelle empfangen und an die Steuereinheit, welcher die ausgewählte Drohne zugeordnet ist, weitergeleitet. Dabei erfolgt insbesondere die Steuerung der ausgewählten Drohne und/oder der Komponenten der ausgewählten Drohne durch die Steuereinheit, welcher die ausgewählte Drohne zugeordnet ist, zumindest teilweise mittels der weitergeleiteten Steuerbefehle. Mit anderen Worten empfängt die Einsatzplattform von der Einsatzanfragestelle gesendete bzw. übermittelte Steuerbefehle und leitet (bzw. sendet) diese empfangenen Steuerbefehle an die Steuereinheit weiter. Dadurch wird eine Steuerung der Drohne durch die Einsatzanfragestelle ermöglicht.

Gemäß einer Ausgestaltung wird die ausgewählte Drohne in Reaktion auf die Startanforderung durch die Steuereinheit, welcher die ausgewählte Drohne zugeordnet ist, gesteuert, um zum Einsatzort zu fliegen, und/oder jede Steuereinheit ist dazu konfiguriert, in Reaktion auf die Startanforderung eine zumindest teilweise automatische Steuerung der ausgewählten Drohne während des Flugs zum und/oder am Einsatzort durchzuführen. Entsprechend dieser Ausgestaltung erfolgt die Steuerung der Drohne unmittelbar durch die Steuereinheit, so dass ein dortiger Bediener, der etwa Sichtkontakt zur Drohne hat, den Flug überwachen kann.

Die Erfindung umfasst ferner eine computerimplementierte Einsatzplattform, wobei die Einsatzplattform vorzugsweise eingerichtet ist, das beschriebene Verfahren durchzuführen, umfassend
eine erste Kommunikationsschnittstelle zum Empfangen einer Einsatzinformation, die einen Einsatzort umfasst;
eine Recheneinheit zum Bestimmen unter Berücksichtigung der Einsatz-information einer Drohne aus der Vielzahl von Drohnen als ausgewählte Drohne, unter Berücksichtigung des Einsatzorts und eines Drohnenstandorts; und
eine zweiten Kommunikationsschnittstelle zum Übermitteln einer Startanforderung, zum Einsatzort zu fliegen, von der Einsatzplattform an eine Steuereinheit, welcher die ausgewählte Drohne zugeordnet ist.

Eine erfindungsgemäße Recheneinheit, z.B. ein Computer oder Computersystem, ist, insbesondere programmtechnisch, dazu eingerichtet, ein erfindungsgemäßes Verfahren durchzuführen.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführender Computer noch für weitere Aufgaben genutzt wird und daher ohnehin vorhanden ist. Schließlich ist ein maschinenlesbares Speichermedium vorgesehen mit einem darauf gespeicherten Computerprogramm wie oben beschrieben. Geeignete Speichermedien bzw. Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich. Ein solcher Download kann dabei drahtgebunden bzw. kabelgebunden oder drahtlos (z.B. über ein WLAN-Netz, eine 3G-, 4G-, 5G- oder 6G-Verbindung, etc.) erfolgen.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

### Kurze Beschreibung der Zeichnungen

Figur 1 zeigt beispielhaft eine Vielzahl von Drohnen sowie an deren Betrieb beteiligte Elemente entsprechend Ausführungsformen der Erfindung als Blockdiagramm.
Figur 2 zeigt ein Ablaufdiagramm gemäß einer Ausführungsform der Erfindung.
Figur 3 zeigt eine exemplarische Kommunikationsstruktur zwischen einer Einsatzplattform, einer Einsatzanfragestelle, einer ausgewählten Drohne und einer Steuereinheit, welcher die ausgewählte Drohne zugeordnet ist, entsprechend Ausführungsformen der Erfindung in schematischer Ansicht.

### Ausführungsform(en) der Erfindung

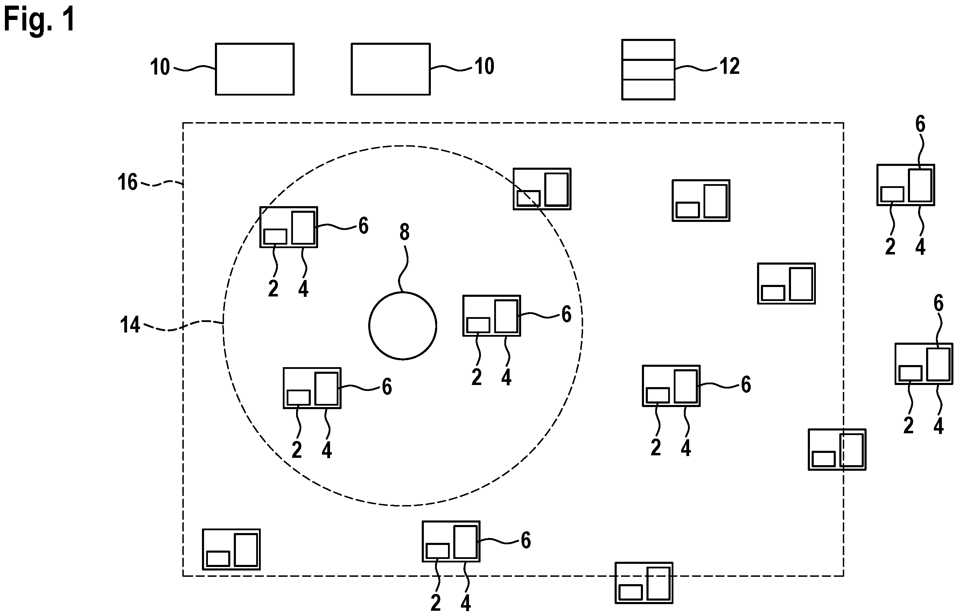

Figur 1 zeigt beispielhaft eine Vielzahl von Drohnen 2 sowie an deren Betrieb beteiligte Elemente entsprechend Ausführungsformen der Erfindung als Blockdiagramm.

Es sind mehrere Drohnen 2 dargestellt, die sich geographisch bzw. räumlich verteilt außerhalb von Einsätzen üblicherweise an jeweiligen Drohnenstandorten 4 bzw. Drohnenstationen bzw. Drohnenbasen befinden (nur einige stellvertretend mit Bezugszeichen versehen). Jede Drohne 2 ist durch eine Steuereinheit 6 steuerbar, der die Drohne zugeordnet ist. Diese Steuerung erfolgt mittels einer jeweiligen Funkverbindung. Die Steuereinheit 6 befindet sich typischerweise ebenfalls am Drohnenstandort 4 oder in dessen Nähe. Es kann ebenso der Fall vorliegen, dass sich mehrere Drohnen am selben Drohnenstandort befinden und/oder mehrere Drohnen durch dieselbe Steuereinheit steuerbar sind und/oder eine oder mehrere Steuereinheiten unabhängig von Drohnenstandorten vorgesehen sind. Beispielsweise kann eine zentrale Steuereinheit oder mehrere dezentrale Steuereinheiten, der bzw. denen jeweils mehrere Drohnen an möglicherweise verschiedenen Drohnenstandorten zugeordnet sind, vorgesehen sein (nicht dargestellt). Das Gebiet bzw. das Aktionsgebiet (z.B. Aktionsradius), innerhalb dessen eine der Drohnen 2 durch die Steuereinheit 6, der die Drohne zugeordnet ist, gesteuert werden kann, d.h. innerhalb dessen die Dohne 2 bewegt werden kann bzw. fliegen kann, ist insbesondere sehr viel kleiner als das Gebiet (etwa eine Stadt, ein Industriegebiet oder ein ländliches Gebiet), über das die Drohnen bzw. deren Drohnenstandorte verteilt sind. Das Aktionsgebiet von Drohnen ist beispielsweise durch die bei der Steuerung verwendete Funkfrequenz, durch eine Topographie, durch eine Sichtweite o.Ä. beschränkt. Bei den Drohnen 2 kann es sich um Drohnen verschiedener Betreiber handeln, z.B. von staatlichen und/oder privaten Nutzern und/oder Wirtschaftsbetrieben.

Die Drohnen 2 sind weiterhin mit bestimmten Komponenten ausgestattet (nicht dargestellt). Wobei verschiedene Drohnen im Allgemeinen verschiedene Komponenten aufweisen. Mögliche Komponenten sind beispielsweise Kameras, z.B. optische Kameras oder Infrarot-Kameras, Sensoren, z.B. Gas-Sensoren oder Temperatur-Sensoren, oder Greifer oder Behälter, um Objekte zu transportieren.

Weiterhin ist ein sogenannter Einsatzort 8 dargestellt. Dabei handelt es sich um einen Ort, an dem eine Drohne eingesetzt werden soll, etwa um Kameraaufnahmen zu erfassen. Der Einsatzort 8 kann etwa ein Brandort (z.B. brennendes Haus) oder ein Veranstaltungsort sein. Im Fall eines Brandorts können beispielsweise seitens der Feuerwehr Kameraaufnahmen, insbesondere Infrarot-Kameraaufnahmen, um eine effiziente Löschmöglichkeit bestimmen zu können, oder Messungen mit Gas-Sensoren, um von freigesetzten Gasen ausgehende Gefahren beurteilen zu können, erwünscht sein. Im Fall eines Veranstaltungsorts können beispielsweise Kameraaufnahmen seitens der Polizei erwünscht sein, um Gefahren für Veranstaltungsteilnehmer zu erkennen.

Entsprechend sind beispielhaft zwei Einsatzanfragestellen 10 (z.B. Feuerwehrdienststelle und Polizeidienststelle) an jeweiligen Standorten im gezeigten Gebiet dargestellt. Eine Einsatzanfragestelle kann sich an einem bestimmten Ort befinden, kann aber ebenso auf mehrere Orte verteilt sein, die nicht zwangsläufig feste Orte sein müssen, beispielsweise könnte auch ein Einsatzfahrzeug der Polizei oder der Feuerwehr eine Einsatzanfragestelle sein. Auch kann sich eine Einsatzanfragestelle innerhalb oder außerhalb des geographischen Gebiets, über das die Drohnen 2 bzw. die Drohnenstandorte 4 verteilt sind, befinden.

Solche Einsatzanfragestellen können zwar über eigene Drohne verfügen, allerdings kann beispielsweise der Fall auftreten, dass diese zeitweise nicht einsetzbar bzw. nicht ausreichend schnell einsetzbar sind (etwa wenn die Polizei über eine begrenzt Anzahl an Drohnen verfügt, die an einer Vielzahl möglicher Einsatzorte, z.B. Veranstaltungsorte, zu vorher nicht genau bekannten Zeitpunkten eingesetzt werden sollen), nicht ausreichend schnell am Einsatzort sein können (etwa, im Fall der Feuerwehr bereits während der Fahrt zu einem Brandort), der Einsatzort außerhalb des Aktionsgebiets einer solchen Drohne liegt oder die eigene Drohne eine bestimmte benötigte Komponente nicht hat. Das vorgeschlagene Verfahren zum Betreiben einer Vielzahl von Drohnen begegnet dieser Problematik, indem es die Nutzung der an den Drohnenstandorten 4 ohnehin stationierten Drohnen 2 ermöglicht.

Um das Verfahren zu implementieren, ist eine computerimplementiere Einsatzplattform 12 vorgesehen, d.h. die Einsatzplattform wird durch Computerprogramme implementiert, die durch eine Recheneinheit bzw. auf einem oder mehreren Computern (z.B. ein einzelner Computer oder Server oder auch ein Computer- oder Serversystem, das mehrere Computer bzw. mehrere Prozessoren einschließt, auch eine Cloud-basierte Ausgestaltung ist denkbar) ausgeführt werden. Die Einsatzplattform (bzw. deren Computer) kann mit den Drohnenstandorten 4 bzw. den dortigen Steuereinheiten 6, den Einsatzanfragestellen 10 und optional mit den Drohnen 2 über Kommunikationsverbindungen Daten
austauschen. Die Kommunikationsverbindungen können unabhängig voneinander drahtlos (z.B. Funkverbindungen, insbesondere Mobilfunkverbindungen) und/oder drahtgebunden (z.B. Glasfaser oder Kupferkabel, etwa VDSL und/oder Ethernet) implementiert sein. Bei den Kommunikationsverbindungen kann es sich um allgemein verfügbare Kommunikationsverbindungen (z.B. Internet, Mobilfunkverbindung über einen kommerziellen Anbieter) und/oder um dezidierte Kommunikationsverbindungen (z.B. dezidierten Funkkanal, VPN) handeln.

Beispielhaft sind in Figur 1 die Einsatzanfragestellen 10 und die Einsatzplattform 12 im Wesentlichen in demselben Gebiet wie die Drohnenstandorte 4 dargestellt. Im Allgemeinen können sich Einsatzanfragestellen und/oder die Einsatzplattform an Orten befinden, die unabhängig von dem Gebiet sind, in dem sich die Drohnenstandorte befinden.

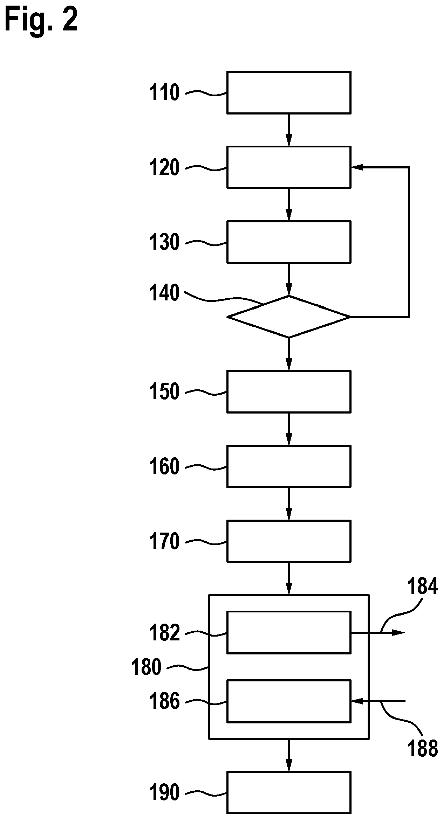

In Figur 1 sind weiterhin ein durch eine gestrichelte Linie dargestellter Umkreis 14 des Einsatzorts 8, z.B. mit einem vorbestimmten Radius und/oder einer vorbestimmten Drohnen-Flugzeit, bei angenommener Drohnen-Geschwindigkeit, und ein ebenfalls durch eine gestrichelte Linie dargestellter Anzeigeausschnitt 16 dargestellt (siehe hierzu die Beschreibung von Schritt 130 der Figur 2).

Figur 2 zeigt ein Ablaufdiagramm gemäß einer Ausführungsform der Erfindung. Das Ablaufdiagramm betrifft ein Verfahren zum Betreiben einer Vielzahl von Drohnen, wobei die Drohnen geographisch an Drohnenstandorten verteilt sind und wobei jede Drohne einer von mehreren Steuereinheiten zugeordnet ist. Beispielsweise können das in Figur 1 dargestellte System mit einer Vielzahl von Drohnen sowie die ebenso in Figur 1 dargestellten weiteren Elemente, d.h. die Einsatzplattform, den Einsatzort und die Einsatzanfragestellen, der Ausführung des Verfahrens zugrunde liegen. Im Verfahren wird insbesondere eine am Einsatzort zu verwendende Drohne bestimmt bzw. ausgewählt. Es wird vorausgesetzt, dass an der Einsatzplattform Daten zu der Vielzahl von Drohnen und/oder deren jeweiligem Drohnenstandort hinterlegt bzw. dort gespeichert sind. Beispielsweise kann für jede Drohne deren Drohnenstandort (geographische Position) und Eigenschaften der Drohne (z.B. mit welchen Komponenten diese ausgestattet ist) gespeichert sein. Diese Daten zu den Drohnen können in einem
Registrierungsprozess erfasst werden, in dem Betreiber der Drohnen ihre Drohnen zur Verwendung im Verfahren zur Verfügung stellen bzw. anmelden.

In Schritt 110 wird durch die computerimplementierte Einsatzplattform eine Einsatzanfrage bzw. eine Einsatzinformation erfasst. Die Einsatzinformation wird z.B. von einer Einsatzanfragestelle (an der die Einsatzinformation z.B. manuell eingegeben werden und/oder, zumindest teilweise, automatisch bestimmt werden) an die Einsatzplattform gesendet bzw. übermittelt und durch die Einsatzplattform empfangen. Auch ist eine manuelle Eingabe und/oder zumindest teilweise automatische Bestimmung an der Einsatzplattform möglich. Im Weiteren wird auf die Einsatzanfragestelle Bezug genommen, wobei dieselben oder sinngemäß gleiche Aktionen bzw. (Teil-)Schritte auch and der Einsatzplattform (statt der Einsatzanfragestelle) erfolgen können.

Die Einsatzinformation umfasst einen Einsatzort, d.h. eine Angabe dazu, wo sich der Einsatzort (geographisch) befindet. Weiter kann die Einsatzinformation eines oder mehrere umfassen von einer Komponenteninformation, einem Einsatzzweck und einem Verfügbarkeitszeitraum. Die Komponenteninformation spezifiziert, welche Komponenten die Drohne, die verwendet werden soll, aufweisen sollte oder muss. Der Einsatzzweck kann allgemeine Bedingungen (z.B. Mindestflugzeit, für die die Drohne am Einsatzort in der Luft sein sollte, Mindestflughöhe, Mindestgeschwindigkeit, o.Ä.) umfassen, die von der zu verwendenden Drohne zu erfüllen sind. Der Verfügbarkeitszeitraum kann einen insbesondere zukünftigen Zeitraum angeben, in dem die zu verwendende Drohne verfügbar sein sollte, wobei der Flug der zu verwendenden Drohne nicht zwangsläufig über den gesamten Verfügbarkeitszeitraum erfolgt, sondern in Reaktion auf eine Startanforderung, die während des Verfügbarkeitszeitraums erfolgt. Ist kein Verfügbarkeitszeitraum angegeben, wird davon ausgegangen, dass der Einsatz der zu verwendenden Drohne möglichst sofort bzw. unmittelbar erfolgen soll.

In Schritt 120 wird die Einsatzinformation ausgewertet und es wird unter Berücksichtigung der Einsatzinformation aus der Vielzahl von Drohnen eine potentiell zu verwendende (bzw. auswählbare) Drohne ausgewählt. Alternativ können im Rahmen einer Vorauswahl zunächst mehrere potentiell zu verwendende (bzw. vorausgewählte) Drohnen ausgewählt werden. Der Einsatzort wird berücksichtigt, indem basierend auf dem Einsatzort und den Drohnenstandorten eine potentiell zu verwendende Drohne ausgewählt wird bzw. in der Vorauswahl mehrere potentiell zu verwendende Drohnen ausgewählt werden, deren Aktionsgebiet den Einsatzort einschließt. Entsprechende Daten für jede Drohne der Vielzahl von Drohnen und deren jeweiligen Drohnenstandort sind beispielsweise durch die Einsatzplattform gespeichert.

Weitergehend kann die Einsatzinformation berücksichtigt werden, indem eine Drohne als potentiell zu verwendende Drohne ausgewählt wird bzw., bei Vorauswahl, indem mehrere Drohnen als potentiell zu verwendende Drohne ausgewählt werden, deren Drohnenstandort die kürzeste geographische Entfernung vom (oder kürzeste Drohnen-Flugzeit zum) Einsatzort aufweist bzw. aufweisen und/oder deren Drohnenstandort innerhalb eines bestimmten Radius um den (oder innerhalb einer maximalen Drohnen-Flugzeit zum) Einsatzort liegt und/oder die mit den in der Komponenteninformation spezifizierten Komponenten ausgestattet ist bzw. sind und/oder die für den Einsatzzweck geeignet ist bzw. sind und/oder die im Verfügbarkeitszeitraum verfügbar ist bzw. sind. Die Berücksichtigung erfolgt so, dass alle Bedingungen entsprechend der Einsatzinformation erfüllt sind. Sollte keine Drohne der Vielzahl von Drohnen alle Bedingungen entsprechend der Einsatzinformation erfüllen, können bestimmte im Rahmen der Einsatzinformation erwünschte Bedingungen unberücksichtigt bleiben, z.B. könnte auf bestimmte Komponenten verzichtet werden. Hierzu kann die Einsatzinformation beispielsweise eine Information zur Priorität der Bedingungen in der Einsatzinformation einschließen, wobei die Bedingungen mit niedrigster Priorität zunächst unberücksichtigt bleiben. Eine solche Information zur Priorität kann auch vorbestimmt sein und beispielsweise an der Einsatzplattform gespeichert sein. Alternativ oder zusätzlich zur Nichtberücksichtigung bestimmter Bedingungen kann vorgesehen sein, dass eine Nachricht mit Inhalt, dass keine Drohne gefunden werden kann, die der Einsatzinformation entspricht, von der Einsatzplattform an die Einsatzanfragestelle gesendet wird. Die Einsatzanfragestelle könnte in Reaktion auf eine solche Nachricht beispielsweise eine modifizierte Einsatzinformation an die Einsatzplattform senden.

Wenn die Vorauswahl mehrerer potentiell zu verwendender (bzw. auswählbarer) Drohnen erfolgt, kann im optionalen Schritt 130 eine dieser Drohnen ausgewählt werden. Diese Auswahl aus der Vorauswahl kann automatisch durch die Einsatzplattform erfolgen, z.B. basierend auf einer bestimmten Einsatzinformation, etwa Entfernung vom Einsatzort, oder kann mittels einer interaktiven Auswahl mit der Einsatzanfragestelle erfolgen, wobei eine entsprechende Datenkommunikation zwischen der Einsatzplattform und der Einsatzanfragestelle erfolgt. Bezugnehmend auf Figur 1 kann bei einer interaktiven Auswahl etwa auf einer Anzeige der Einsatzanfragestelle ein geographischer Ausschnitt, der die Einsatzstelle 8 einschließt, dargestellt werden, z.B. der Anzeigeausschnitt 16 in Figur 1, wobei ebenso die innerhalb dieses Ausschnitts befindlichen Drohnenstandorte 4 dargestellt werden. Weiter kann durch den Umkreis 14 angezeigt werden, welche Drohnen eine geeignete Entfernung oder eine geeignete Flugzeit (d.h. ausreichend gering) zum Einsatzstandort 8 aufweisen. Es kann dann durch einen Bediener mittels einer Interaktion, z.B. einem Mausklick oder im Falle eines Touchscreens einer Berührung, eine Drohne ausgewählt werden, wobei vorgesehen sein kann, dass zunächst zusätzliche Informationen (z.B. Komponenten der Drohne) angezeigt werden und die Auswahl anschließend erfasst wird. Die Auswahl wird an die Einsatzplattform 12 übermittelt, welche diese erfasst.

Im optionalen Schritt 140 wird durch die Einsatzplattform geprüft, ob die potentiell zu verwendende Drohne (gegebenenfalls nach Auswahl einer einzelnen Drohne aus den mehreren potentiell zu verwendenden Drohnen, die in einer Vorauswahl bestimmt wurden) einsatzbereit ist, insbesondere ob diese sofort einsatzbereit ist oder gegebenenfalls im Verfügbarkeitszeitraum einsatzbereit ist. Der Begriff einsatzbereit soll heißen, dass die Drohne flugbereit und verfügbar (d.h. noch nicht anderweitig verplant) ist. Diese Prüfung kann basierend auf bereits an der Einsatzplattform bekannten Daten für die Drohnen, die zumindest für einige der Drohnen der Vielzahl von Drohnen Zeiten angeben, in denen die jeweiligen Drohnen einsatzbereit sind, oder die angeben, ob die jeweilige Drohne augenblicklich einsatzbereit ist, erfolgen. Solche Daten können z.B. von den Steuereinheiten in regelmäßigen oder unregelmäßigen Zeitabständen oder zu bestimmten Zeitpunkten (etwa Beginn und Ende der Einsatzbereitschaft) an die Einsatzplattform übermittelt werden. Alternativ oder zusätzlich kann die Einsatzplattform mittels einer Datenkommunikation mit der Steuereinheit, der die potentiell zu verwendende Drohne zugeordnet ist, bestimmen, ob die potentiell zu verwendende Drohne einsatzbereit ist. In diesem Fall sendet die Einsatzplattform eine Einsatzbereitschaftsanfrage an die Steuereinheit, der die potentiell zu verwendende Drohne zugeordnet ist, und diese Steuereinheit sendet in Reaktion eine Einsatzbereitschaftsanzeige, die anzeigt, ob oder ob nicht die Drohne einsatzbereit ist, an die Einsatzplattform. Falls Zeiten, an denen die betreffende Drohne einsatzbereit ist, bereits an der Einsatzplattform bekannt sind, können diese selbstverständlich bereits im Rahmen der Berücksichtigung der Einsatzinformationen, d.h. bei der Bestimmung der potentiell zu verwendenden Drohne bzw. der potentiell zu verwendenden Drohnen, berücksichtigt werden; Schritt 140 kann dann entfallen. Insbesondere kann, wenn im Rahmen der Einsatzinformation ein Verfügbarkeitszeitraum berücksichtigt wird, davon ausgegangen werden, dass die betreffende Drohne im Verfügbarkeitszeitraum einsatzbereit ist.

Wenn in Schritt 140 festgestellt wird, dass die potentiell zu verwendende Drohne nicht einsatzbereit ist, wird zu Schritt 120 zurückgesprungen, d.h. es erfolgt eine erneute Auswahl einer potentiell zu verwendenden Drohne bzw., bei Vorauswahl, mehrerer potentiell zu verwendender Drohnen, wobei die Drohne, für die in Schritt 140 festgestellt wurde, dass sie nicht einsatzbereit ist, von der Wahl in Schritt 120 sinnvollerweise ausgeschlossen bleibt.

Wenn andererseits in Schritt 140 festgestellt wird, dass die potentiell zu verwendende Drohne einsatzbereit ist, wird in Schritt 150 die potentiell zu verwendende Drohne als zu verwendende Drohne bestimmte, d.h. diese Drohne wird als die ausgewählte Drohne bestimmt.

In Schritt 160 wird von der Einsatzplattform eine Startanforderung (Startfreigabe) zu der Steuereinheit, der die in Schritt 150 ausgewählte Drohne zugeordnet ist, gesendet bzw. übermittelt. Die Startanforderung stellt eine Freigabe bzw. Anforderung an die Steuereinheit dar, die ausgewählte Drohne zu steuern, um zum Einsatzort zu fliegen. Die Startanforderung kann unmittelbar gesendet werden, wobei optional zuvor eine Rückfrage der Einsatzplattform bei der Einsatzanfragestelle per Datenkommunikation vorgesehen sein kann, ob die Startanforderung gesendet werden soll, und die Startanforderung nur gesendet wird, wenn die Einsatzanfragestelle auf die Rückfrage bestätigt, dass die Startanforderung gesendet werden soll. Wenn im Rahmen der Einsatzinformation ein Verfügbarkeitszeitraum berücksichtigt wird, kann vorgesehen sein, dass die Einsatzplattform die Startanforderung zu einem Zeitpunkt während des Verfügbarkeitszeitraums sendet, wobei weiterhin vorgesehen sein kann, dass die Einsatzplattform die Startanforderung in Reaktion auf ein Startsignal von der Einsatzanfragestelle, das innerhalb des Verfügbarkeitszeitraums erfolgt, an die Steuereinheit, der die ausgewählte Drohne zugeordnet ist, übermittelt bzw. sendet.

In Schritt 170 erfolgt in Reaktion auf die Startanforderung der Start und Flug der ausgewählten Drohne zum Einsatzort. Der Flug zum Einsatzort kann zumindest teilweise automatisch gesteuert erfolgen, z.B. durch eine automatische Steuerung mittels der Steuereinheit und/oder einer automatischen Steuerung eines Steuergeräts der Drohne.

Schritt 180 betrifft den Einsatz der ausgewählten Drohne während des Flugs zum Einsatzort und/oder am Einsatzort, d.h. nach Erreichen des Einsatzorts.

Der Einsatz (am Einsatzort und/oder während des Fluges zum Einsatzort) kann in Schritt 182 ein Erfassen von Daten einschließen. Erfasste Daten sind insbesondere mit Sensoren erfasste Daten, beispielsweise Kameraaufnahmen, etwa Videoaufnahmen und/oder Bildaufnahmen, und/oder Audioaufnahmen und/oder andere Sensormessungen. Die erfassten Daten 184 können von der Drohne direkt an die Einsatzplattform und/oder an die Drohnensteuerung, welche die erfassten Daten ganz oder zumindest teilweise an die Einsatzplattform übermittelt, gesendet werden. Die erfassten Daten können von der Einsatzplattform an die Einsatzanfragestelle weiter übermittelt werden.

Weiter kann in Schritt 186 während des Einsatzes (am Einsatzort und/oder während des Fluges zum Einsatzort) vorgesehen sein, dass die ausgewählte Drohne (z.B. deren Flug) und/oder deren Komponenten zumindest teilweise basierend auf Steuerbefehlen 188 erfolgt, die von der Einsatzplattform an die ausgewählte Drohne bzw. deren Komponenten gesendet bzw. übermittelt werden. Die Steuerbefehle können direkt von der Einsatzplattform an die ausgewählte Drohne gesendet werden und/oder indirekt über die Steuereinheit, der die ausgewählte Drohne zugeordnet ist, an die ausgewählte Drohne übermittelt werden (d.h. von der Einsatzplattform an die Steuereinheit gesendet werden und von dieser an die Drohne gesendet werden). Weiter kann vorgesehen sein, dass die Einsatzplattform die Steuerbefehle von der Einsatzanfragestelle empfängt. Die Steuerbefehle können die Drohne selbst, z.B. deren Flugbahn und/oder Orientierung, betreffen und/oder an der Drohne angebrachte Komponenten, z.B. eine an der Drohne befestigte Kamera, betreffen.

In Schritt 190 erfolgt beispielhaft ein Rückflug der ausgewählten Drohne vom Einsatzort zu ihrem Drohnenstandort. Abweichend davon könnte die Drohne auch am Einsatzort gelandet werden. Der Rückflug wird insbesondere durch die Steuereinheit, der die ausgewählte Drohne zugeordnet ist, gesteuert. Der Rückflug kann z.B. in Reaktion auf eine Rückfluganforderung von der Einsatzplattform an die Steuereinheit erfolgen, wobei die Einsatzplattform die Rückfluganforderung z.B. in Reaktion auf eine Rückfluganweisung von der Einsatzanfragestelle an die Steuereinheit übermittelt.

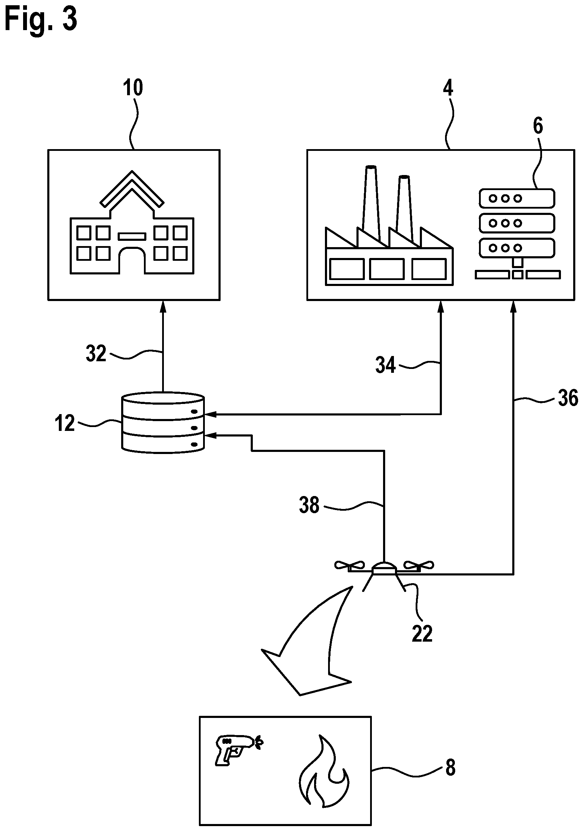

Figur 3 zeigt eine exemplarische Kommunikationsstruktur zwischen einer computerimplementierten Einsatzplattform 12, einer Einsatzanfragestelle 10 (beispielsweise eine Feuerwehrdienststelle), einer ausgewählten Drohne 22 und einer Steuereinheit 6 der ausgewählten Drohne, d.h. welcher die ausgewählte Drohne zugeordnet ist, entsprechend Ausführungsformen der Erfindung in einer schematischen Ansicht. Weiter ist ein Einsatzort 8 (beispielsweise eine Brandstelle) dargestellt. Es ist eine Situation gezeigt, in der sich die ausgewählte Drohne 22 auf dem Flug zum Einsatzort oder bereits am Einsatzort befindet. Die Steuereinheit 6 der ausgewählten Drohne befindet sich am entsprechenden Drohnenstandort 4 (beispielsweise ein Fabrikgelände).

Dargestellt sind eine Datenkommunikationsverbindung 32 zwischen der Einsatzanfragestelle 10 und der Einsatzplattform 12, eine Datenkommunikationsverbindung 34 zwischen der Einsatzplattform 12 und der Steuereinheit 6 der ausgewählten Drohne bzw. dem entsprechenden Drohnenstandort 4, eine Datenkommunikationsverbindung 36 zwischen der Steuereinheit 6 der ausgewählten Drohne und der ausgewählten Drohne 22 und eine optionale Datenkommunikationsverbindung 38 zwischen der ausgewählten Drohne 22 und der Einsatzplattform 12. Die Datenkommunikationsverbindungen 32, 34, 36, 38 können unabhängig voneinander drahtgebunden und/oder drahtlos ausgeführt sein. Die Datenkommunikationsverbindung 36, 38 zur ausgewählten Drohne 22 sind zumindest teilweise drahtlos (per Funkverbindung) ausgeführt.

Über die Datenkommunikationsverbindung 32 zwischen der Einsatzanfragestelle 10 und der Einsatzplattform 12 werden insbesondere die Einsatzinformation sowie gegebenenfalls ein Startsignal und/oder Steuerbefehle und/oder von der ausgewählten Drohne 22 erfasste Daten kommuniziert.

Über die Datenkommunikationsverbindung 34 zwischen Einsatzplattform 12 und der Steuereinheit 6 werden insbesondere die Startanforderung sowie gegebenenfalls Daten zur Abfrage der Einsatzbereitschaft und/oder Steuerbefehle und/oder von der ausgewählten Drohne 22 erfasste Daten kommuniziert. Auch können bei einer Registrierung der Drohne bzw. des Drohnenstandorts Daten kommuniziert werden, die die geographische Position des Drohnenstandorts angeben.

Über die Datenkommunikationsverbindung 36 zwischen der Steuereinheit 6 der ausgewählten Drohne und der ausgewählten Drohne 22 werden insbesondere die Steuerbefehle zur Flugsteuerung, die von der Steuereinheit selbst erzeugt werden, sowie gegebenenfalls Steuerbefehle von der Einsatzanfragestelle (die über die Einsatzplattform weitergeleitet werden) und/oder von der ausgewählten Drohne 22 erfasste Daten (zur Weiterleitung and die Einsatzplattform, welche diese an die Einsatzanfragestelle weiterleitet) kommuniziert.

Über die Datenkommunikationsverbindung 38 zwischen der ausgewählten Drohne 22 und der Einsatzplattform 12 werden insbesondere von der ausgewählten Drohne 22 erfasste Daten (zur Weiterleitung an die Einsatzanfragestelle) kommuniziert.

## Patentansprüche

1. Verfahren zum Betreiben einer Vielzahl von geographisch verteilten Drohnen (2), die geographisch an Drohnenstandorten (4) verteilt sind und die jeweils einer von mehreren Steuereinheiten (6) zugeordnet sind, umfassend:
Erfassen (110) durch eine computerimplementierte Einsatzplattform (12) einer Einsatzinformation, die einen Einsatzort (8) umfasst;
Bestimmen (150) durch die Einsatzplattform (12) unter Berücksichtigung der Einsatzinformation einer Drohne aus der Vielzahl von Drohnen (2) als ausgewählte Drohne (22), unter Berücksichtigung des Einsatzorts (8) und der Drohnenstandorte (4); und
Übermitteln (160) einer Startanforderung, zum Einsatzort (8) zu fliegen, von der Einsatzplattform (12) an die Steuereinheit (6), welcher die ausgewählte Drohne (22) zugeordnet ist.

2. Verfahren nach Anspruch 1, wobei die Einsatzinformation durch die Einsatzplattform (12) von einer Einsatzanfragestelle (10) empfangen wird.

3. Verfahren nach Anspruch 1 oder 2,
wobei die Einsatzinformationen Komponenteninformationen, die benötigte Komponenten spezifizieren, umfassen, wobei bei dem Bestimmen der ausgewählten Drohne (22) berücksichtigt wird (120), ob die ausgewählte Drohne die in den Komponenteninformationen spezifizierten Komponenten aufweist; und/oder
wobei die Einsatzinformationen einen Einsatzzweck umfassen, wobei bei dem Bestimmen der ausgewählten Drohne (22) berücksichtigt wird (120), ob die ausgewählte Drohne für den Einsatzzweck geeignet ist.

4. Verfahren nach einem der vorstehenden Ansprüche, wobei die Einsatzinformationen einen Verfügbarkeitszeitraum umfassen; wobei bei dem Bestimmen der ausgewählten Drohne (22) berücksichtigt wird (120), ob die ausgewählte Drohne im Verfügbarkeitszeitraum einsatzbereit bzw. verfügbar ist.

5. Verfahren nach Anspruch 4, soweit abhängig von Anspruch 2, wobei die Startanforderung von der Einsatzplattform (12) in Reaktion auf ein Startsignal von der Einsatzanfragestelle (10), das innerhalb des Verfügbarkeitszeitraums erfolgt, an die Steuereinheit (6), welcher die ausgewählte Drohne (22) zugeordnet ist, übermittelt wird.

6. Verfahren nach einem der vorstehenden Ansprüche, wobei bei dem Bestimmen der ausgewählten Drohne (22) wenigstens eine unter Berücksichtigung der Einsatzinformationen potentiell zu verwendende Drohne aus der Vielzahl von Drohnen (2) bestimmt wird (120), für die wenigstens eine potentiell zu verwendende Drohne bestimmt wird (140), ob diese einsatzbereit ist, und eine einsatzbereite Drohne als die ausgewählte Drohne (22) bestimmt wird.

7. Verfahren nach Anspruch 6, wobei das Bestimmen (140), ob die wenigstens eine potentiell zu verwendende Drohne einsatzbereit ist, mittels Datenkommunikation mit der Steuereinheit (6), der die jeweilige potentiell zu verwendende Drohne zugeordnet ist, erfolgt; wobei insbesondere jede Steuereinheit (6) dazu konfiguriert ist, Bereitschafts-Informationen, die die Einsatzbereitschaft der ihr zugeordneten Drohne (2) bzw. Drohnen anzeigen, in Reaktion auf eine Bereitschafts-Anfrage von der Einsatzplattform (12) und/oder automatisch an die Einsatzplattform (12) zu übermitteln.

8. Verfahren nach einem der vorstehenden Ansprüche, wobei bei dem Bestimmen der ausgewählten Drohne (22) der Einsatzort (8) und die Drohnenstandorte (4) berücksichtigt werden, indem die eine oder die mehreren Drohnen berücksichtigt werden, die Drohnenstandorte (4) aufweisen, die die kleinsten geographischen Abstände und/oder Drohnen-Flugzeiten zum Einsatzort (8) aufweisen und/oder deren geographische Abstände und/oder Drohnen-Flugzeiten zum Einsatzort (8) kleiner als ein vorbestimmter geographischer Maximalabstand bzw. eine vorbestimmte Maximal-Drohnen-Flugzeit sind.

9. Verfahren nach einem der vorstehenden Ansprüche, wobei dem Bestimmen der ausgewählten Drohne (22) eine Vorauswahl (130) mehrerer potentiell zu verwendender bzw. vorausgewählter Drohnen einschließt; wobei die Vorauswahl (130) so erfolgt, dass die Einsatzinformationen berücksichtigt werden; wobei aus den mehreren potentiell zu verwendenden Drohnen eine Drohne durch die Einsatzplattform (12) automatisch als die ausgewählte Drohne (22) bestimmt wird; und/oder, soweit abhängig von Anspruch 2,
wobei unter Verwendung von Datenkommunikation zwischen der Einsatzplattform (12) und der Einsatzanfragestelle (10) eine Drohne aus den mehreren potentiell zu verwendenden Drohnen als die ausgewählte Drohne (22) bestimmt wird.

10. Verfahren nach einem der vorstehenden Ansprüche,
wobei durch die ausgewählte Drohne (22) vom Einsatzort (8) und/oder während des Fluges zum Einsatzort erfasste Daten, insbesondere Videodaten und/oder Audiodaten und/oder Sensordaten, an die Einsatzplattform (12) übermittelt werden; und/oder
wobei durch die ausgewählte Drohne (22) vom Einsatzort (8) und/oder während des Fluges zum Einsatzort erfasste Daten, insbesondere Videodaten und/oder Audiodaten und/oder Sensordaten, an die Steuereinheit (6), welcher die ausgewählte Drohne zugeordnet ist, übermittelt werden und wobei die Daten von der Steuereinheit, welcher die ausgewählte Drohne zugeordnet ist, an die Einsatzplattform (12) weitergeleitet werden.

11. Verfahren nach Anspruch 10, soweit abhängig von Anspruch 2, wobei die erfassten Daten durch die Einsatzplattform (12) an die Einsatzanfragestelle (10) weitergeleitet werden.

12. Verfahren nach einem der vorstehenden Ansprüche, soweit abhängig von Anspruch 2, wobei durch die Einsatzplattform (12) Steuerbefehle für die ausgewählte Drohne (22) und/oder für Komponenten der ausgewählten Drohne von der Einsatzanfragestelle (10) empfangen und an die Steuereinheit (6), welcher die ausgewählte Drohne zugeordnet ist, weitergeleitet werden; und wobei insbesondere die Steuerung der ausgewählten Drohne (22) und/oder der Komponenten der ausgewählten Drohne durch die Steuereinheit, welcher die ausgewählte Drohne zugeordnet ist, zumindest teilweise mittels der weitergeleiteten Steuerbefehle erfolgt.

13. Verfahren nach einem der vorstehenden Ansprüche,
wobei die ausgewählte Drohne (22) in Reaktion auf die Startanforderung durch die Steuereinheit (6), welcher die ausgewählte Drohne zugeordnet ist, gesteuert wird, zum Einsatzort (8) zu fliegen; und/oder
wobei jede Steuereinheit (6) dazu konfiguriert ist, in Reaktion auf die Startanforderung eine zumindest teilweise automatische Steuerung der ausgewählten Drohne (22) während des Flugs zum und/oder am Einsatzort (8) durchzuführen.

14. Computerimplementierte Einsatzplattform (12), wobei die Einsatzplattform (12) vorzugsweise eingerichtet ist, das Verfahren nach einem der Ansprüche 1 bis 13 durchzuführen, umfassend
eine erste Kommunikationsschnittstelle zum Empfangen einer Einsatzinformation, die einen Einsatzort (8) umfasst;
eine Recheneinheit zum Bestimmen (150) unter Berücksichtigung der Einsatzinformation einer Drohne aus der Vielzahl von Drohnen (2) als ausgewählte Drohne (22), unter Berücksichtigung des Einsatzorts (8) und eines Drohnenstandorts (4); und
eine zweite Kommunikationsschnittstelle zum Übermitteln (160) einer Startanforderung, zum Einsatzort (8) zu fliegen, von der Einsatzplattform (12) an eine Steuereinheit (6), welcher die ausgewählte Drohne (22) zugeordnet ist.

15. Recheneinheit (12), die dazu eingerichtet ist, alle Verfahrensschritte eines Verfahrens nach einem der Ansprüche 1 bis 13 durchzuführen.

16. Computerprogramm, das eine Recheneinheit dazu veranlasst, alle Verfahrensschritte eines Verfahrens nach einem der Ansprüche 1 bis 13 durchzuführen, wenn es auf der Recheneinheit ausgeführt wird.

17. Maschinenlesbares Speichermedium mit einem darauf gespeicherten Computerprogramm nach Anspruch 16.
